# EUROPÄISCHE PATENTANMELDUNG

(11) **EP 0 671 196 A1**
(43) Veröffentlichungstag der Anmeldung: **13.09.1995**
(21) Anmeldenummer: 95250033.8
(22) Anmeldetag: 10.02.1995
(51) Int. Cl.: B01D 1/04, B01D 1/30, B01D 19/02

(54) **Vorrichtung zur Verdampfung von schäumenden Flüssigkeiten**

(30) Priorität: 11.03.1994 DE 4409059
(71) Anmelder: MANNESMANN Aktiengesellschaft, D-40213 Düsseldorf (DE)
(72) Erfinder: Schneider, Rudi, D-79697 Wies (DE)
(74) Vertreter: Meissner, Peter E., Dipl.-Ing.

(57) **Zusammenfassung**

Die Erfindung betrifft eine Vorrichtung zur Verdampfung von schäumenden Flüssigkeiten mittels mechanischer Brüdenverdichtung mit einem Verdampfer.
Um die durch Schaumbildung verursachten Störungen und Nachteile zu vermeiden, ist vorgeschlagen, daß der Verdampfer (21) eine quaderförmige Form mit einer rechteckigen Querschnittsfläche aufweist, deren längere Seite (22) in Richtung des Verdampfungsweges (27) liegt und im Ausdampfbereich mindestens zwei Umlenkbleche (24-26) angeordnet sind.

## Beschreibung

Die Erfindung betrifft eine Vorrichtung zur Verdampfung von schäumenden Flüssigkeiten mittels mechanischer Brüdenverdichtung gemäß dem Gattungsbegriff des Hauptanspruches.

Bei der gattungsmäßigen Verdampfung von verschmutzten Industrieabwässern und Lösemitteln, beispielsweise Reinigungswässer, Waschwässer, Emulsionen kommt es oft zum Aufschäumen der zu reinigenden Schmutzware. Dies geschieht insbesondere dann, wenn die zu reinigende Flüssigkeit Tenside und bestimmte Verunreinigungen enthält. Bei zu starkem Aufschäumen gelangt der Schaum in das Destillat und verschmutzt es.

Bisher war es üblich, Abhilfe durch Zusetzen sogenannter chemischer Entschäumer zu schaffen. Diese chemischen Zusätze müssen aber genau auf die jeweilige Schmutzware abgestimmt sein und verursachen teilweise nicht unerhebliche Kosten und zusätzliche Belastungen des Rückstandes. Bei einem anderen Verfahren wird durch Zugabe eines Mittels in den Verdampfer, beispielsweise zähflüssiges Silikon-Öl, die Oberflächenspannung der zu verdampfenden Schmutzware verändert, um so die Dampfblasenbildung zu unterdrücken. Auch diese Mittel müssen genau auf die Schmutzware abgestimmt sein. Außerdem ist es in vielen Fällen störend, wenn Spuren dieses Mittels in das Destillat gelangen.

Aus der DE 34 43 652 A1 ist es bekannt, auf dem gebildeten Schaum eine abgezweigte Menge der Verfahrensflüssigkeit in Form vieler kleiner Tröpfchen zu spritzen. Die eingespritzte Verfahrensflüssigkeit wird einem Vorrat entnommen oder aus dem Prozeß z. B. in Form von Destillat oder Kondensat abgeleitet. Nachteilig dabei ist, daß zusätzliche Bauteile benötigt werden, der Steuerungsaufwand für die Einspritzung entsprechend hoch ist und die Destillatleistung durch die abgezweigte Menge verringert wird.

In der DE-GM 74 41 420 ist eine Vorrichtung zur Verdampfung von schäumenden Flüssigkeiten offenbart, bei der durch eine spezielle Anordnung von einer oder mehreren Umlaufverdampfern das Flüssigkeits-Schaumgemisch im Ausdampfgefäß in Zirkulation versetzt wird. Wegen seiner geringeren Dichte wird der Schaum zur Mitte des Ausdampfgefäßes abgedrängt und durch Scherung zerstört. Diese Anordnung ist konstruktiv sehr aufwendig und der Platzbedarf entsprechend hoch.

In der Beschreibung der zuvor genannten Schrift wird es als bekannt angesehen, das Flüssigkeits-Dampf-Schaumgemisch auf Strömungshindernisse aufprallen zu lassen. Diese Methode wird als nachteilig angesehen, da durch das Strömungshindernis eine Zerstäubung der Flüssigkeit eintritt, die die Flüssigkeitsabscheidung im Brüdenraum beeinträchtigt.

Aufgabe der Erfindung ist es, eine Vorrichtung zur Verdampfung von schäumenden Flüssigkeiten mittels mechanischer Brüdenverdichtung anzugeben, mit der in einfacher Weise die durch Schaumbildung verursachten Störungen und Nachteile vermieden werden.

Diese Aufgabe wird mit den im kennzeichnenden Teil des Hauptanspruches 1 angegebenen Merkmalen gelöst. Vorteilhafte Weiterbildungen sind Bestandteil von Unteransprüchen.

Erfindungsgemäß ist der Verdampfer quaderförmig mit einem rechteckigen Querschnitt ausgebildet, dessen längere Seite in Richtung des Verdampfungsweges liegt, wobei im Ausdampfbereich mindestens zwei Umlenkbleche angeordnet sind. Gegenüber einem zylinderförmigen Verdampfer mit kreisförmigem Querschnitt weist der erfindungsgemäße Verdampfer ein vergrößertes freies Volumen über dem Flüssigkeitsspiegel auf. Dies hat zur Folge, daß beim Auftreten von Schaum noch genügend Strömungsquerschnitt zur Verfügung steht, so daß Schaum nicht mitgerissen wird. Außerdem bietet der rechteckige Querschnitt eine vereinfachte Anordnung und Kantengeometrie für die Umlenkbleche.

In bekannter Weise ist der Wärmetauscher als liegendes Rohrbündel angeordnet. Durch das gezielte Umlenken des Dampfstromes wird der Strömungsweg so stark verlängert, daß der entstehende Schaum den Saugstutzen nicht erreicht. Unterstützt wird diese Wirkung, wenn wie vorgesehen, die Umlenkbleche einmal in Richtung des Strömungsweges geneigt sind und zusätzlich noch in der Querschnittsebene. Diese Doppelneigung erleichtert die Abscheidung der mitgerissenen Tröpfchen sowie des an den Wänden kondensierenden Dampfes, die dann in den Sumpf zurückfließen können. Auch der aufsteigende Schaum, der nach einer bestimmten Wegstrecke zusammenfällt, fließt auf diese Weise zurück. Zusätzlich kann das Umlenkblech noch eine Oberflächenstruktur, z.B. in Form von Noppen, Rillen oder ähnliches aufweisen, so daß der Abscheidegrad weiter erhöht wird. Der Abstand des ersten Umlenkbleches in bezug auf den Flüssigkeitsspiegel und der nachfolgenden Umlenkbleche zueinander muß so gewählt werden, daß die Dampfgeschwindigkeit nicht zu hoch wird und damit die Gefahr besteht, daß Schaum bis in den Saugstutzenbereich mitgerissen wird. Erfahrungsgemäß sollte deshalb die Dampfgeschwindigkeit bei einem Wert unterhalb 1 m/sec liegen.

Der Vorteil der erfindungsgemäßen Vorrichtung ist darin zu sehen, daß mit Ausnahme einer einfachen Anordnung von Umlenkblechen ansonsten keine weiteren Bauteile erforderlich sind und eine aufwendige Steuerung entfällt. Trotzdem wird der gewünschte Effekt allein nur durch die konstruktive Gestaltung des Verdampfers erreicht.

In der Zeichnung wird anhand eines Ausführungsbeispieles die erfindungsgemäße Vorrichtung näher erläutert.

Es zeigen:
Figur 1 ein Prinzipfließbild einer mechanischen Brüdenverdichtung
Figur 2 im Längsschnitt einen erfindungsgemäßen Verdampfer
Figur 3 ein Schnitt entlang der Linie A-A in Fig. 2

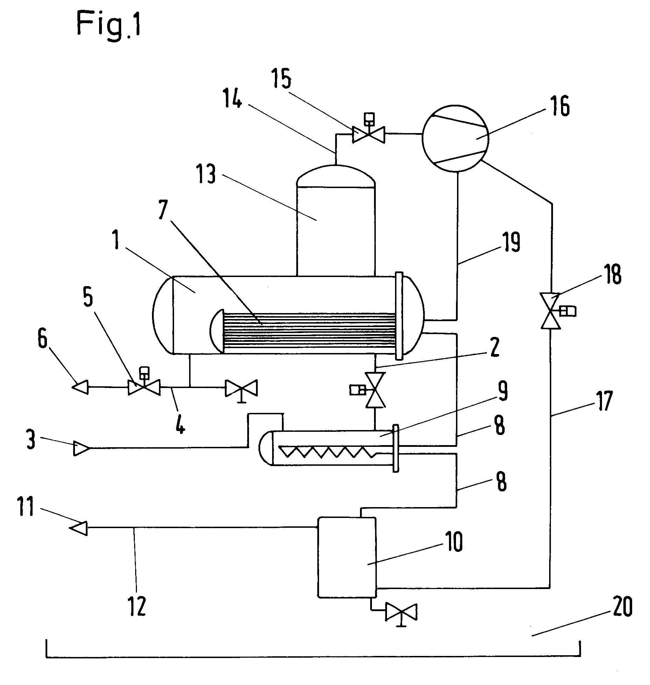

Figur 1 zeigt in Form eines Prinzipfließbildes die wesentlichen Elemente einer Verdampferanlage mittels mechanischer Brüdenverdichtung. Sie besteht aus einem Verdampfer 1, dem über eine Leitung 2 die zu reinigende Schmutzware 3 zugeführt und über ein in eine Leitung 4 angeordnetes Ablaßventil 5 der Rückstand 6 gesteuert abgezogen wird. Im Verdampfer 1 ist eine liegender Rohrbündelwärmetauscher 7 angeordnet, in dem die heißen Brüdendämpfe kondensieren und und das Destillat über eine Leitung 8 einem weiteren als Rekuperator 9 ausgebildeten Wärmetauscher zugeführt werden. Nach Durch lauf durch den Rekuperator 9 wird das abgekühlte Reindestillat einem Vorratsbehälter 10 zugeführt. Bei Erreichen einer bestimmten Füllhöhe kann das Destillat 11 über eine Leitung 12 abgezogen werden. Die im Verdampfer 1 in den Dom 13 aufsteigenden Brüdendämpfe werden über eine Leitung 14 und einem daran angeordneten Ventil 15 vom flüssigkeitsgekühlten Verdichter 16 angesaugt. Für die Kühlung des üblicherweise als Wälzkolbenpumpe ausgebildeten Verdichters 16 wird ein Teil des im Vorratsbehälters gespeicherten Destillats verwendet. Dazu ist der Vorratsbehälter 10 über eine mit einem Ventil 18 versehene Leitung 17 mit dem Verdichter 16 verbunden. Die Brüdendämpfe werden durch den Verdichter 16 von einigen hundert Millibar und einer Temperatur größer 100^{o} C auf etwa Atmosphärendruck verdichtet.

Nach der Verdichtung strömen die heißen Brüdendämpfe über eine Leitung 19 durch den Rohrbündelwärmetauscher 7 und kondensieren darin. Damit im Falle einer Störung möglichst keine Schmutzware 3 oder Rückstand 6 in die Umgebung gelangen kann, ist es üblich, die gesamte Anlage in einer Bodenwanne 20 anzuordnen.

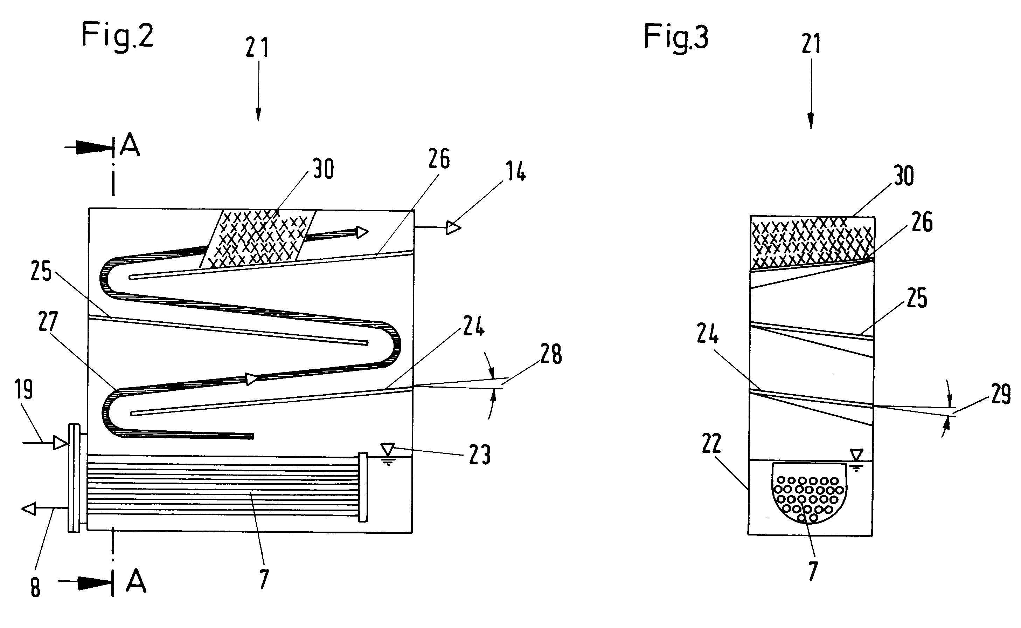

In Figur 2 ist in einem Längsschnitt und in Figur 3 in einem Schnitt entlang der Linie A-A in Figur 2 ein erfindungsgemäßer Verdampfer 21 dargestellt. Die geometrische Figur ist im wesentlichen ein Quader mit einer rechteckigen Querschnittsfläche, deren längere Seite 22 in Richtung des Verdampfungsweges liegt. Der liegende Rohrbündelwärmetauscher 7 ist wie in Figur 1 im unteren Bereich des Verdampfers 21 angeordnet, wobei die Zufuhr der Schmutzware so gesteuert wird, daß der Wärmetauscher 7 immer voll bedeckt ist. Die vollständige Bedeckung ist in dieser Darstellung durch das Flüssigkeitssymbol 23 gekennzeichnet. In dem über dem Rohrbündelwärmetauscher 7 liegenden Ausdampfbereich sind beispielsweise drei Umlenkbleche 24 bis 26 angeordnet, so daß der aufsteigende Dampf 27 zwangsweise von links nach rechts und wieder zurückgeführt wird und damit erfindungsgemäß einen längeren als sonst üblichen Weg zurücklegt. Vorteilhafterweise sind die Umlenkbleche 24 bis 26 geneigt, hier gekennzeichnet durch den Winkel 28, so daß die abgeschiedenen Tröpfchen, der teilweise kondensierende Dampf sowie der zerfallende Schaum in den Sumpf abfließen können. Die Wirkung wird noch verbessert, wenn, wie in Figur 3 gezeigt, die Umlenkbleche 24 bis 26 zusätzlich in der Querschnittsebene geneigt sind. Auch hier ist die Neigung durch einen Winkel 29 gekennzeichnet. Der Abstand des ersten Umlenkbleches 24 in bezug auf den Flüssigkeitsspiegel 23 und der Abstand der nachfolgenden Umlenkbleche 25, 26 zueinander wird so gewählt, daß so viel freier Strömungsquerschnitt zur Verfügung steht, daß Dampfgeschwindigkeiten kleiner als 1 m/sec zu realisieren sind.

Um mit Sicherheit das Mitreißen von Tröpfchen in den Verdichter 16 zu verhindern, wird im Bereich des letzten Umlenkbleches 26 eine Pallringpackung 30 angeordnet.

## Patentansprüche

1. Vorrichtung zur Verdampfung von schäumenden Flüssigkeiten mittels mechanischer Brüdenverdichtung mit einem Verdampfer, in dem ein liegendes Rohrbündel als Wärmetauscher angeordnet und der im Ausdampfbereich mit einem Strömungshindernis versehen ist,
**dadurch gekennzeichnet,**
daß der Verdampfer (21) eine quaderförmige Form mit einer rechteckigen Querschnittsfläche aufweist, deren längere Seite (22) in Richtung des Verdampfungsweges (27) liegt und im Ausdampfbereich mindestens zwei Umlenkbleche (24-26) angeordnet sind.

2. Vorrichtung nach Anspruch 1,
**dadurch gekennzeichnet,**
daß vorzugsweise drei Umlenkbleche (24-26) vorgesehen sind, die im Verdampfer (21) eine Neigung (28) aufweisen, so daß die abgeschiedenen Tröpfchen in den Sumpf zurückfließen können.

3. Vorrichtung nach Anspruch 2,
**dadurch gekennzeichnet,**
daß die Umlenkbleche (24-26) zusätzlich auch in der Querschnittsebene (29) geneigt sind.

4. Vorrichtung nach den Ansprüchen 1 bis 3,
**dadurch gekennzeichnet,**
daß der Abstand des ersten Umlenkbleches (24) zum Flüssigkeitsspiegel (23) und der nachfolgenden Umlenkbleche (25, 26) zueinander so gewählt wird, daß die Dampfgeschwindigkeit im Verdampfungsweg (27) kleiner 1 m/sec ist.

5. Vorrichtung nach den Ansprüchen 1 bis 4,
**dadurch gekennzeichnet,**
daß die Umlenkbleche eine Oberflächenstruktur aufweisen.
